# FASCICULE DE BREVET EUROPEEN

(11) **EP 2 385 755 B1**
(45) Date de publication et mention de la délivrance du brevet: **13.03.2013**
(21) Numéro de dépôt: 10706285.3
(22) Date de dépôt: 07.01.2010
(51) Int. Cl.: A01D 69/02

(54) **TONDEUSE ELECTRIQUE A CONDUCTEUR PORTE ET A ALIMENTATION AUTONOME EN FONCTIONNEMENT**
ELEKTRISCHER RASENMÄHER MIT FAHRER UND MIT AUTONOM ARBEITENDER STROMVERSORGUNG
ELECTRIC LAWNMOWER WITH A CARRIED DRIVER AND WITH AN AUTONOMOUSLY OPERATING POWER SUPPLY

(30) Priorité: 09.01.2009 FR 0950110
(43) Date de publication de la demande: 16.11.2011
(73) Titulaire: Etesia (Societe Par Actions Simplifiee), 67160 Wissembourg (FR)
(72) Inventeur: SCHMITT, Alfred, F-67250 Lampertsloch (FR); BUHL, Thomas, F-67250 Memmelshoffen (FR)
(74) Mandataire: Nuss, Laurent
(86) Numéro de dépôt international: PCT/FR2010/050015
(87) Numéro de publication internationale: WO 2010/079301

(56) Documents cités:
- EP-A2- 1 645 456
- WO-A2-97/28681
- FR-A5- 2 151 894
- US-A1- 2007 204 581

## Description

La présente invention concerne le domaine des tondeuses, plus particulièrement les tondeuses électriques, et a pour objet une tondeuse à conducteur porté, électrique et à alimentation autonome en fonctionnement.

Actuellement, la plupart des tondeuses sont encore entraînées par des moteurs thermiques.

Toutefois, compte tenu des pressions croissantes liées à l'écologie et des demandes des utilisateurs en matière de confort d'utilisation, les tondeuses à entraînement électrique se sont fortement développées récemment, du fait également de l'augmentation de l'efficacité des batteries ou accumulateurs, d'une part, et des moteurs, d'autre part.

Alors que les tondeuses électriques à alimentation filaire sont d'une mise en oeuvre fastidieuse et inappropriée pour des surfaces de tonte importantes, les tondeuses électriques à alimentation autonome en fonctionnement permettent de proposer une solution alliant le confort de l'entraînement électrique à la liberté de mouvement de l'entraînement thermique.

De nombreuses réalisations de tondeuses électriques autonomes du type à conducteur marchand tractées ou poussées ont déjà été proposées.

La gestion du fonctionnement de ce type de tondeuse électrique est relativement simple du fait de la présence d'un unique entraînement électrique.

Néanmoins, les tondeuses à conducteur marchand tractées ou poussées ne sont pas adaptées aux surfaces de grande taille, pour lesquelles les tondeuses à conducteur porté (plus généralement connues sous la désignation tondeuses autoportées) sont préférées.

En prévoyant une motorisation entièrement électrique avec une alimentation autonome en fonctionnement pour ce dernier type de tondeuse, il est possible de proposer à l'utilisateur une tondeuse performante et confortable à l'usage présentant en particulier les avantages suivants :
- elle est écologique du fait de l'absence d'émission de gaz de combustion et de l'absence de rejet d'hydrocarbures, du fumées et de particules ;
- elle est silencieuse du fait de l'absence de bruit en mode déplacement seul et de la génération d'un bruit fortement diminué en mode tonte ;
- elle est économique, en particulier lorsque le chargement est réalisé en heures creuses et, le cas échéant, au moins partiellement à l'aide de sources d'énergie renouvelable (solaire, éolien) ;
- elle ne nécessite qu'une maintenance réduite du fait de l'absence de courroie, de filtres et d'huile moteur.

Or, pour ce type de tondeuse à conducteur porté, il y a lieu de gérer deux types d'entraînement différents, à savoir l'entraînement du ou des organes de coupe et l'entraînement de propulsion de la tondeuse elle-même, ce en relation avec les performances et l'état de la source d'énergie embarquée.

Par le dépôt FR 2 151 894 on connaît déjà un tracteur équipé d'une tondeuse et pourvu d'un moteur électrique de traction et des moteurs d'entraînement des lames de coupe, alimentés par une batterie embarquée.

Toutefois, à l'exception de circuits de sécurité et d'organes de commande primaires, aucun moyen particulier de gestion du fonctionnement, en particulier des entraînements électriques, n'est prévu sur ce tracteur.

En outre, la modification de la vitesse de déplacement est réalisée au moyen d'une boîte de vitesse, nécessitant ainsi une manoeuvre spécifique de la part du conducteur.

La présente invention a notamment pour but de pallier les inconvénients précités, en proposant une tondeuse à conducteur porté électrique faisant état d'une constitution et de performances sensiblement identiques à celles d'un modèle thermique équivalent et présentant un confort d'utilisation amélioré et une sécurité de fonctionnement accrue, en réalisant notamment une limitation des puissances absorbées, une limitation des pics de courant néfastes à l'autonomie et une optimisation de la durée de vie du moyen de stockage électrique.

A cet effet, la présente invention a pour objet une tondeuse électrique à conducteur porté et à alimentation autonome en fonctionnement, comprenant essentiellement un châssis monté sur des moyens de roulement, dont certains au moins sont reliés à un moyen de direction, et supportant un moyen d'assise pour l'utilisateur et au moins un dispositif de coupe avec un ou plusieurs organes de coupe, ladite tondeuse à conducteur porté comprenant en outre, d'une part, un moyen embarqué d'accumulation d'énergie électrique, tel qu'au moins une batterie ou au moins un accumulateur, d'autre part, au moins un premier moteur électrique d'entraînement en déplacement de ladite tondeuse à conducteur porté et, enfin, au moins un second moteur électrique d'entraînement dudit au moins un organe de coupe,
tondeuse à conducteur porté caractérisée en ce que chacun des moteurs électriques est commandé par un variateur associé, adapté au type de moteur considéré, ce en fonction de signaux de commande délivrés par des organes de commande correspondants et de signaux d'état et/ou de mesure délivrés par des organes capteurs et/ou détecteurs correspondants, les états et/ou modes de fonctionnement desdits moteurs étant également au moins partiellement interdépendants et tributaires de l'état de charge du moyen d'accumulation d'énergie électrique, la gestion du fonctionnement des différents moteurs étant réalisée soit par une unité électronique de traitement spécifique, soit par des unités électroniques de traitement intégrés aux différents variateurs et coopérant de manière complémentaire, cette gestion étant réalisée sur la base d'une programmation prédéterminée et en tenant compte des différents signaux précités.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
les figures 1 et 2 sont des représentations en perspective, selon deux angles différents, d'une tondeuse à conducteur porté électrique selon l'invention, les éléments d'habillage de la tondeuse et les parois du panier ayant été omises pour des raisons de clarté,
la figure 3 est un schéma de principe et fonctionnel de la tondeuse représentée sur les figures 1 et 2.

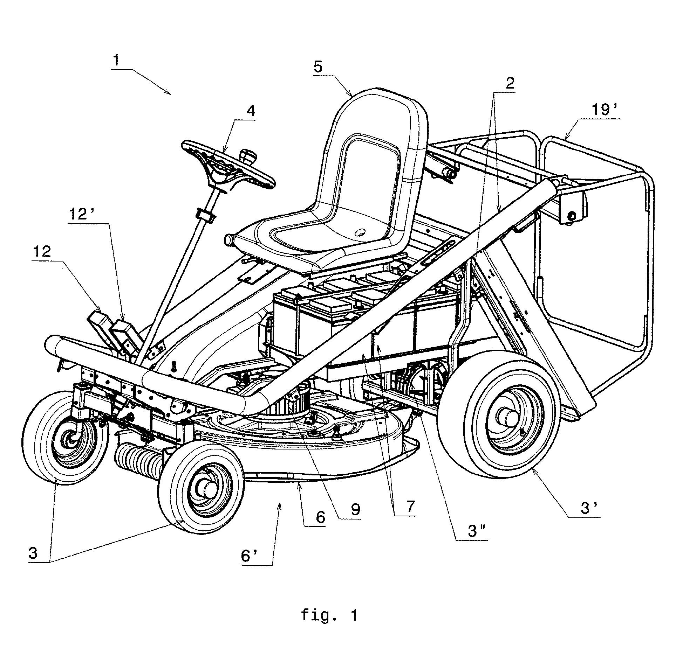

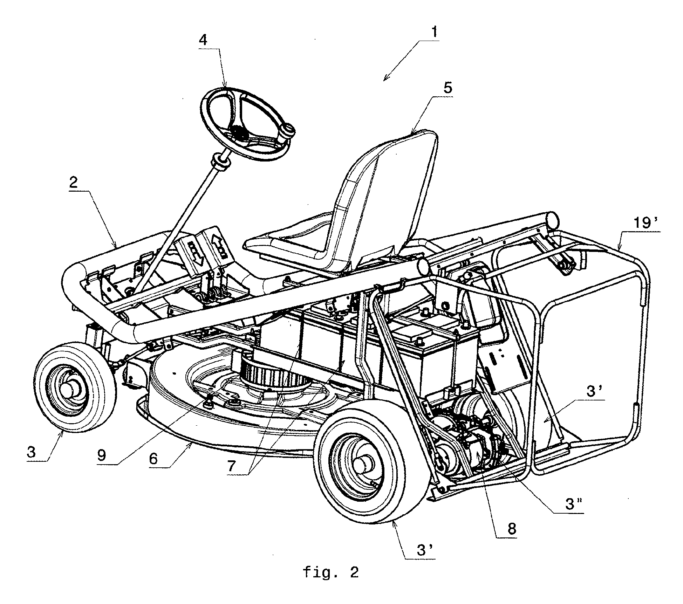

Comme le montrent les figures 1 et 2, la tondeuse 1 à conducteur porté électrique présente une structure générale sensiblement similaire à celle d'une tondeuse à conducteur porté thermique et comprend essentiellement un châssis 2 monté sur des moyens de roulement 3, 3', dont certains au moins sont reliés à un moyen de direction 4, et supportant un moyen d'assise (siège) 5 pour l'utilisateur et au moins un dispositif de coupe 6 avec un ou plusieurs organes de coupe (lames) 6'.

Cette tondeuse à conducteur porté 1 électrique comprend en outre, d'une part, un moyen 7 embarqué d'accumulation d'énergie électrique, tel qu'au moins une batterie ou au moins un accumulateur (par exemple plusieurs batteries plomb/acide reliées en série et/ou en parallèle), d'autre part, au moins un premier moteur électrique 8 d'entraînement en déplacement de ladite tondeuse à conducteur porté 1 et, enfin, au moins un second moteur électrique 9 d'entraînement dudit au moins un organe de coupe 6'.

Conformément à l'invention, chacun des moteurs électriques 8, 9 est commandé par un variateur 10, 11 associé, adapté au type de moteur 8, 9 considéré, ce en fonction de signaux de commande délivrés par des organes de commande 12, 12', 13, 20 correspondants et de signaux d'état et/ou de mesure délivrés par des organes capteurs et/ou détecteurs 14, 14', 18, 19 correspondants, les états et/ou modes de fonctionnement desdits moteurs 8, 9 étant également au moins partiellement interdépendants et tributaires de l'état de charge du moyen 7 d'accumulation d'énergie électrique, la gestion du fonctionnement des différents moteurs 8, 9 étant réalisée soit par une unité électronique de traitement spécifique, soit par des unités électroniques de traitement 10', 11' intégrés aux différents variateurs 10, 11 et coopérant de manière complémentaire, cette gestion étant réalisée sur la base d'une programmation prédéterminée et en tenant compte des différents signaux précités.

Grâce aux dispositions précitées la tondeuse 1 fait état de moyens permettant une gestion optimisée de son fonctionnement, le mode de gestion pouvant notamment être au moins partiellement prédéfini par programmation préalable.

Les moteurs électriques 8, 9 peuvent être de différents types, à savoir à courant continu, synchrones ou asynchrones, les moteurs 8 étant éventuellement d'un type différent de celui des moteurs 9, ce en fonction éventuellement du coût, des puissances requises, de priorités de fonctionnement et/ou de spécificités d'utilisation.

A titre d'exemple, le moteur 8 peut être de type asynchrone et le moteur 9 de type synchrone (en particulier si une seule vitesse d'entraînement du ou des organes de coupe est envisagée).

Les variateurs 10 et 11 mis en oeuvre sont bien entendu choisis en fonction du type des moteurs 8, 9, de la puissance à fournir à ces derniers, et, le cas échéant, de spécificités de fonctionnement particulières.

A titre d'exemple, ces variateurs 10, 11 peuvent être du type à contrôle vectoriel. Ces variateurs peuvent se présenter sous la forme de modules électroniques/électrotechniques montés dans des boîtiers indépendants ou regroupés dans un même boîtier.

Préférentiellement, le moyen d'accumulation 7 est positionné de manière centrale par rapport au châssis 2 et relativement bas (par exemple sensiblement sous le siège 5) et est constitué de plusieurs éléments mis en série, leur capacité cumulée étant déterminée en fonction de l'autonomie de tonte souhaitée (par exemple 1 500 m²).

Le chargement du moyen d'accumulation 7 peut se faire classiquement au moyen d'un chargeur branché sur le secteur, mais des solutions de chargement alternatives du type photovoltaïque ou éolien peuvent aussi être envisagé (sources d'énergie renouvelable installées au niveau du local de rangement de la tondeuse 1), éventuellement à titre complémentaire, pour les chargements de remise à niveau.

En accord avec une première caractéristique de l'invention, il peut être prévu qu'une limitation automatique de la vitesse maximale de déplacement est réalisée en cas de mise en fonctionnement dudit au moins un dispositif de coupe 6, la course mécanique du ou des organes 12, 12' de commande du déplacement demeurant préférentiellement inchangée, conservant de ce fait une amplitude de mouvement constante pour le conducteur.

Ainsi, à titre d'exemple, en mode déplacement seul, la vitesse d'avance maximale peut être de 8 km/h et en mode déplacement avec tonte la vitesse d'avance maximale peut être fixée à 5 km/h. En cas d'enclenchement de l'entraînement du ou des organes de coupe 6' en cours de déplacement de la tondeuse 1, la vitesse de déplacement maximale de cette dernière est automatiquement ramenée à 5 km/h. De même, la vitesse maximale de déplacement peut éventuellement être automatiquement augmentée en cas de coupure de la fonction tonte.

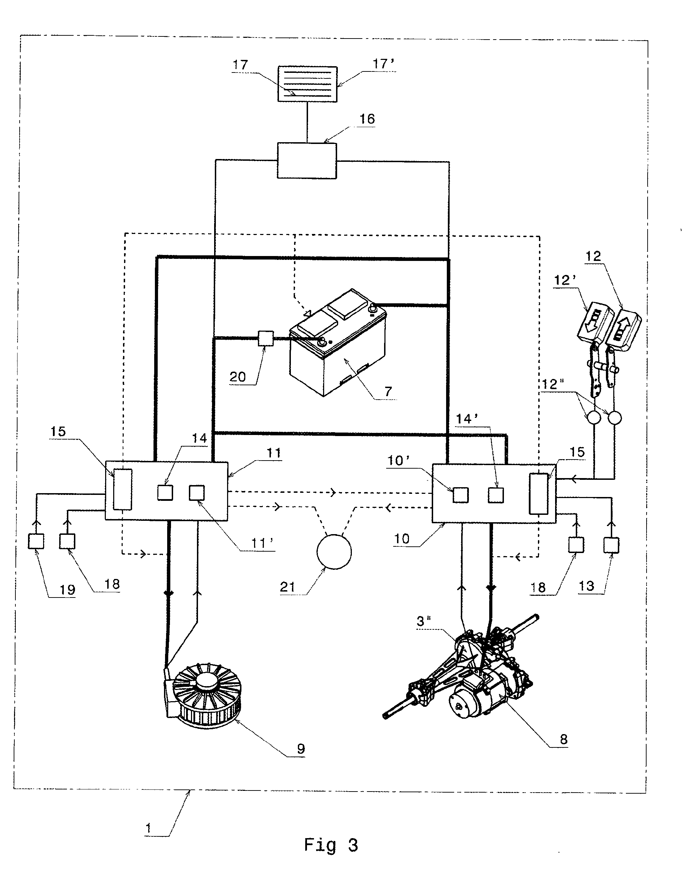

Selon une autre caractéristique de l'invention, ressortant des figures 1 et 3, les organes de commande du déplacement 12, 12' consistent en deux pédales (par exemple basculantes ou pivotantes) associées à un potentiomètre commun ou chacune à un potentiomètre 12" correspondant, délivrant un signal de commande qui est fonction de la position de la pédale ou de la pédale 12, 12' associée, une première pédale 12 commandant le déplacement en marche avant et la seconde pédale 12' commandant le déplacement en marche arrière.

Afin de permettre de bloquer la vitesse de déplacement à une valeur donnée et d'éviter ainsi les variations de vitesse involontaires résultant de mouvements intempestifs du pied du conducteur sur la pédale 12, 12' dus aux irrégularités du terrain (nids de poule, cailloux, ...), la tondeuse à conducteur porté 1 peut également comprendre un moyen de régulation de vitesse de déplacement, préférentiellement intégré au variateur associé au(x) moteur(s) considéré(s), ledit moyen de régulation étant commandé par un organe 13 d'activation et de désactivation manoeuvrable par l'utilisateur (par exemple un bouton poussoir à implusion).

Ce moyen de régulation permet ainsi de limiter les variations brutales et pics de puissance absorbée, et assure en outre un confort d'utilisation à l'utilisateur pour des tontes sur de longues distances.

En vue de limiter automatiquement les intensités des courants absorbés par les moteurs 8, 9 et fournis par le moyen d'accumulation 7 à des valeurs maximales autorisées prédéterminées, la tondeuse à conducteur porté 1 comporte, éventuellement intégrés aux variateurs 10, 11, des capteurs 14, 14' de mesure des courants d'appel des différents moteurs 8, 9, chacune des valeurs mesurées et leur somme étant comparées à des valeurs limite supérieures respectivement correspondantes, dont le dépassement entraîne une réduction des vitesses de rotation, voire un arrêt, du moteur 8 ou 9 concerné ou de l'ensemble desdits moteurs 8, 9.

Lorsqu'une décharge importante (niveau de charge faible) du moyen 7 d'accumulation d'énergie électrique est détectée, il peut être prévu que le fonctionnement de ladite tondeuse 1 est dégradé ou limité, différents modes de fonctionnement dégradé avec des limitations fonctionnelles croissantes pouvant être prévus, dont chacun est en rapport avec un niveau ou degré de déchargement (niveau de charge restante inférieur à une valeur seuil basse).

Plus précisément, en fonction de la tension t mesurée aux bornes du moyen 7 d'accumulation d'énergie électrique, indiquant le niveau de charge de ce dernier, les modes de fonctionnement 1) à 4) suivants de la tondeuse peuvent être imposés par l'unité ou les unités de traitement 10', 11':
- 1) t ≥ T1 : possibilité de fonctionnement normal (sous réserve d'ordres de commandes adaptés de l'utilisateur et d'absence de risque de sécurité) ;
- 2) T2 ≤ t < T1 : l'alimentation du ou des moteurs d'entraînement 9 du ou des organes de coupe 6' est coupée ;
- 3) T3 ≤ t < T2 : l'alimentation du ou des moteurs 9 d'entraînement du ou des organes de coupe 6' est coupée et la vitesse de rotation maximale du ou des moteurs 8 d'entraînement en déplacement est limitée ;
- 4 ) t < T3 : coupure de l'alimentation de tous les moteurs 8 et 9 et arrêt complet de la tondeuse 1 ;
avec T1, T2 et T3 représentant des valeurs de tensions inférieures à la tension nominale du moyen 7 d'accumulation d'énergie électrique telles que T1 > T2 > T3.

A titre d'exemple, pour un moyen d'accumulation sous la forme de quatre batteries accumulateurs de 12 Volts montés en série, il peut être prévu que : T1 - 42 Volts, T2 = 41 Volts et T3 = 40 Volts.

En accord avec une variante de réalisation avantageuse de l'invention, les variateurs 10, 11 présentent un fonctionnement réversible (en intégrant par exemple des onduleurs réversibles) et sont associés à des condensateurs 15 respectifs, permettant ainsi d'absorber l'énergie électrique délivrée par les moteurs 8, 9 associés lorsque ces derniers fonctionnent en génératrices, pour l'envoyer de manière contrôlée vers le moyen d'accumulation 7 et/ou vers un ou plusieurs autres moteurs 8, 9.

Cette disposition permet non seulement une récupération d'énergie bénéfique dans certains contextes de fonctionnement (déplacement en pente descendante, en phase de freinage, lors de la décélération de l'organe ou des organes de coupe 6' après coupure de l'alimentation du moteur 9 correspondant), mais également d'éviter un échauffement indésirable des composants et circuits électroniques résultant de l'énergie non utilisée transformée en calories.

Conformément à une caractéristique additionnelle de l'invention, et comme le montre la figure 3, la tondeuse à conducteur porté 1 peut comporter au moins une source 16 de courant alternatif, éventuellement à différentes tensions réglables, reliée au moyen 7 d'accumulation d'énergie électrique, intégrant au moins un circuit hacheur et pourvu d'au moins un dispositif de connexion externe, tel qu'une prise et/ou un câble 17.

Cette source 16 peut notamment être adaptée pour fournir, en fonction du choix de l'utilisateur, des tensions alternatives de 48 Volts, 110 Volts et 230 Volts.

La tondeuse à conducteur porté 1 constitue ainsi un générateur automobile permettant d'alimenter localement divers outils ou appareillages électriques, notamment utilisés dans les espaces verts, tels que sécateurs, scies, pompes, taille-haies, coupe-bordures ou analogues.

Afin de permettre un raccordement à distance des outils ou appareillages précités, la tondeuse à conducteur porté peut aussi comporter au moins un enrouleur de câble 17', l'une des extrémités dudit câble 17 étant préférentiellement reliée, éventuellement de manière amovible, à la source de courant alternatif 16 embarquée.

En plus des organes de commande et des organes de sécurité primaires, tels que clé de mise sous tension, interrupteur marche/arrêt pour le(s) moteur(s) 9, détecteurs thermiques, fusibles et analogue, connus de l'homme du métier pour ce type de matériel électrique, la tondeuse à conducteur porté électrique 1 selon l'invention peut en outre également comporter :
- au moins un détecteur 18 de présence d'un conducteur sur le moyen d'assise 5, par exemple sous la forme d'un contacteur de siège,
- au moins un détecteur 19 de présence et/ou de fermeture d'un panier de ramassage 19' monté de manière mobile et/ou amovible sur le châssis 2 de ladite tondeuse 1, et/ou,
- un moyen d'arrêt d'urgence 20 apte à réaliser une coupure complète de l'alimentation à partir du moyen 7 d'accumulation d'énergie électrique, par exemple sous la forme d'un bouton à enfoncer.

En vue d'informer l'utilisateur de l'état général de la tondeuse à conducteur porté 1, il peut être prévu que l'unité de traitement spécifique ou les unités de traitement complémentaires 10', 11' réalise(nt) en permanence une fonction de diagnostic en temps réel de l'état et du mode de fonctionnement de la tondeuse 1 et de ses différentes fonctions, ce sur la base des signaux fournis par les différents capteurs et détecteurs, les résultats dudit diagnostic étant visualisés, éventuellement de manière codée, par l'intermédiaire d'un ou de plusieurs moyens d'affichage 21, comprenant par exemple au moins un afficheur à cristaux liquides, pouvant être aisément appréhendé par l'utilisateur en position de conduite.

Lors de la mise sous tension de la tondeuse 1, il peut notamment être prévu que les organes de commande de déplacement sont automatiquement positionnés au point mort (vérification de cette disposition lors du diagnostic).

Conformément à un premier mode de réalisation pratique de la tondeuse à conducteur porté 1, représenté aux figures 1 et 2, les moyens de roulement sont composés de deux roues directrices avant 3 et de deux roues motrices arrière 3', l'organe de coupe 6' étant entraîné directement par le moteur 9 correspondant et les roues motrices 3' étant entraînées à travers un réducteur différentiel 3" par le moteur 8 correspondant.

Conformément à un second mode de réalisation pratique de la tondeuse à conducteur porté 1, non représenté aux dessins annexés, les moyens de roulement sont composés de deux roues folles et de deux roues motrices entraînées chacune par un moteur propre correspondant, les vitesses de rotation relatives de ces derniers étant régulées par le moyen de direction (la direction de déplacement résulte du différentiel de vitesse entre les deux roues motrices).

Bien qu'il soit préférentiellement prévu un unique dispositif de coupe 6 comprenant un seul organe de coupe 6', la tondeuse à conducteur porté 1 peut en variante comporter plusieurs dispositifs de coupe 6 avec un ou plusieurs organes de coupe 6' ou un seul dispositif de coupe 6 avec plusieurs organes de coupe 6', de telle manière qu'elle comporte au moins deux organes de coupe entraînés par au moins un moteur correspondant et montés de manière mutuellement décalée transversalement.

La présente invention a également pour objet un procédé de commande du fonctionnement d'une tondeuse à conducteur porté électrique à alimentation autonome en fonctionnement.

Cette tondeuse 1 comprend essentiellement un châssis 2 monté sur des moyens de roulement 3, 3', dont certains au moins sont reliés à un moyen de direction 4, et supportant un moyen d'assise 5 pour l'utilisateur et au moins un dispositif de coupe 6 avec un ou plusieurs organes de coupe 6', cette tondeuse 1 comprenant en outre, d'une part, un moyen 7 embarqué d'accumulation d'énergie électrique, tel qu'au moins une batterie ou au moins un accumulateur, d'autre part, au moins un premier moteur électrique 8 d'entraînement en déplacement de ladite tondeuse à conducteur porté et, enfin, au moins un second moteur électrique 9 d'entraînement dudit au moins un organe de coupe.

Le procédé caractérisé en ce qu'il consiste à commander chacun des moteurs électriques 8, 9 par l'intermédiaire d'un variateur 10, 11 associé, adapté au type de moteur 8, 9 considéré, ce en fonction de signaux de commande délivrés par des organes de commande 12, 12', 13, 20 correspondants et de signaux d'état et/ou de mesure délivrés par des organes capteurs et/ou détecteurs 14, 14', 18, 19 correspondants, les états et/ou modes de fonctionnement desdits moteurs 8, 9 étant également au moins partiellement interdépendants et tributaires de l'état de charge du moyen 7 d'accumulation d'énergie électrique, la gestion du fonctionnement des différents moteurs 8, 9 étant réalisée soit par une unité électronique de traitement spécifique, soit par des unités électroniques de traitement 10', 11' intégrés aux différents variateurs 10, 11 et coopérant de manière complémentaire, cette gestion étant réalisée sur la base d'une programmation prédéterminée et en tenant compte des différents signaux précités.

La tondeuse 1 commandée en fonctionnement présente avantageusement une ou plusieurs des caractéristiques décrites ci-dessus et, le cas échéant, représentées sur les dessins annexés.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Tondeuse (1) électrique à conducteur porté et à alimentation autonome en fonctionnement, comprenant essentiellement un châssis (2) monté sur des moyens de roulement (3), dont certains au moins sont reliés à un moyen de direction (4), et supportant un moyen d'assise (5) pour l'utilisateur et au moins un dispositif de coupe (6) avec un ou plusieurs organes de coupe, ladite tondeuse (1) à conducteur porté comprenant en outre, d'une part, un moyen embarqué d'accumulation d'énergie électrique (7) tel qu'au moins une batterie ou au moins un accumulateur, d'autre part, au moins un premier moteur électrique (8) d'entraînement en déplacement de ladite tondeuse (1) à conducteur porté et, enfin, au moins un second moteur électrique (4) d'entraînement dudit au moins un organe de coupe (6), tondeuse à conducteur porté (1) **caractérisée en ce que** chacun des moteurs électriques (8, 9) est commandé par un variateur (10, 11) associé, adapté au type de moteur (8, 9) considéré, ce en fonction de signaux de commande délivrés par des organes de commande (12, 12', 13, 20) correspondants et de signaux d'état et/ou de mesure délivrés par des organes capteurs et/ou détecteurs (14, 14', 18, 19) correspondants, les états et/ou modes de fonctionnement desdits moteurs (8, 9) étant également au moins partiellement interdépendants et tributaires de l'état de charge du moyen (7) d'accumulation d'énergie électrique, la gestion du fonctionnement des différents moteurs (8, 9) étant réalisée soit par une unité électronique de traitement spécifique, soit par des unités électroniques de traitement (10', 11') intégrés aux différents variateurs (10, 11) et coopérant de manière complémentaire, cette gestion étant réalisée sur la base d'une programmation prédéterminée et en tenant compte des différents signaux précités.

2. Tondeuse à conducteur porté électrique selon la revendication 1, **caractérisée en ce qu'**une limitation automatique de la vitesse maximale de déplacement est réalisée en cas de mise en fonctionnement dudit au moins un dispositif de coupe (6), la course mécanique du ou des organes (12, 12') de commande du déplacement demeurant préférentiellement inchangée.

3. Tondeuse à conducteur porté électrique selon la revendication 1 ou 2, **caractérisée en ce que** les organes de commande du déplacement (12, 12') consistent en deux pédales associées à un potentiomètre commun ou chacune à un potentiomètre (12") correspondant, délivrant un signal de commande qui est fonction de la position des pédales (12, 12') ou de la pédale (12, 12') associée, une première pédale (12) commandant le déplacement en marche avant et la seconde pédale (12') commandant le déplacement en marche arrière.

4. Tondeuse à conducteur porté électrique selon l'une quelconque des revendications 1 à 3, **caractérisée en ce qu'**elle comprend également un moyen de régulation de vitesse de déplacement, préférentiellement intégré au variateur associé au(x) moteur(s) considéré(s), ledit moyen de régulation étant commandé par un organe (13) d'activation et de désactivation manoeuvrable par l'utilisateur.

5. Tondeuse à conducteur porté électrique selon l'une quelconque des revendications 1 à 4, **caractérisée en ce qu'**elle comporte, éventuellement intégrés aux variateurs (10, 11), des capteurs (14, 14') de mesure des courants d'appel des différents moteurs (8, 9), chacune des valeurs mesurées et leur somme étant comparées à des valeurs limite supérieures respectivement correspondantes, dont le dépassement entraîne une réduction des vitesses de rotation, voire un arrêt, du moteur (8 ou 9) concerné ou de l'ensemble desdits moteurs (8, 9).

6. Tondeuse à conducteur porté électrique selon l'une quelconque des revendications 1 à 5, **caractérisée en ce que**, lorsqu'une décharge importante du moyen (7) d'accumulation d'énergie électrique est détectée, le fonctionnement de ladite tondeuse (1) est dégradé ou limité, différents modes de fonctionnement dégradé avec des limitations fonctionnelles croissantes pouvant être prévus, dont chacun est en rapport avec un niveau ou degré de déchargement.

7. Tondeuse à conducteur porté électrique selon la revendication 6, **caractérisée en ce que**, en fonction de la tension (t) mesurée aux bornes du moyen (7) d'accumulation d'énergie électrique, indiquant le niveau de charge de ce dernier, les modes de fonctionnement 1) à 4) suivants sont imposés par l'unité ou les unités de traitement (10', 11') :
- 1) t ≥ T1: possibilité de fonctionnement normal ;
- 2) T2 ≤ t < T1 : l'alimentation du ou des moteurs d'entraînement (9) du ou des organes de coupe (6') est coupée,
- 3) T3 ≤ t < T2 : l'alimentation du ou des moteurs (9) d'entraînement du ou des organes de coupe (6') est coupée et la vitesse de rotation maximale du ou des moteurs (8) d'entraînement en déplacement est limitée ;
- 4) t < T3 : coupure de l'alimentation de tous les moteurs (8 et 9) et arrêt complet de la tondeuse (1) ;
avec T1, T2 et T3 représentant des valeurs de tensions inférieures à la tension nominale du moyen (7) d'accumulation d'énergie électrique et telles que T1 > T2 > T3.

8. Tondeuse à conducteur porté électrique selon l'une quelconque des revendications 1 à 7, **caractérisée en ce que** les variateurs (10, 11) présentent un fonctionnement réversible et sont associés à des condensateurs (15) respectifs, permettant ainsi d'absorber l'énergie électrique délivrée par les moteurs (8, 9) associés lorsque ces derniers fonctionnent en génératrices, pour l'envoyer de manière contrôlée vers le moyen d'accumulation (7) et/ou vers un ou plusieurs autres moteurs (8, 9).

9. Tondeuse à conducteur porté électrique selon l'une quelconque des revendications 1 à 8, **caractérisée en ce qu'**elle comporte au moins une source (16) de courant alternatif, éventuellement à différentes tensions réglables, reliée au moyen (7) d'accumulation d'énergie électrique, intégrant au moins un circuit hacheur et pourvu d'au moins un dispositif de connexion externe, tel qu'une prise et/ou un câble (17).

10. Tondeuse à conducteur porté électrique selon l'une quelconque des revendications 1 à 9, **caractérisée en ce qu'**elle comporte au moins un enrouleur de câble (17'), l'une des extrémités dudit câble (17) étant préférentiellement reliée, éventuellement de manière amovible, à la source de courant alternatif (16) embarquée.

11. Tondeuse à conducteur porté électrique selon l'une quelconque des revendications 1 à 10, **caractérisée en ce qu'**elle comporte au moins un détecteur (18) de présence d'un conducteur sur le moyen d'assise (5), par exemple sous la forme d'un contacteur de siège.

12. Tondeuse à conducteur porté électrique selon l'une quelconque des revendications 1 à 11, **caractérisée en ce qu'**elle comporte au moins un détecteur (19) de présence et/ou de fermeture d'un panier de ramassage (19') monté de manière mobile et/ou amovible sur le châssis (2) de ladite tondeuse (1).

13. Tondeuse à conducteur porté électrique selon l'une quelconque des revendications 1 à 12, **caractérisée en ce qu'**elle comporte un moyen d'arrêt d'urgence (20) apte à réaliser une coupure complète de l'alimentation à partir du moyen (7) d'accumulation d'énergie électrique, par exemple sous la forme d'un bouton à enfoncer.

14. Tondeuse à conducteur porté électrique selon l'une quelconque des revendications 1 à 13, **caractérisée en ce que** l'unité de traitement spécifique ou les unités de traitement complémentaires (10', 11') réalise(nt) en permanence une fonction de diagnostic en temps réel de l'état et du mode de fonctionnement de la tondeuse (1) et de ses différentes fonctions, ce sur la base des signaux fournis par les différents capteurs et détecteurs, les résultats dudit diagnostic étant visualisés, éventuellement de manière codée, par l'intermédiaire d'un ou de plusieurs moyens d'affichage (21), comprenant par exemple au moins un afficheur à cristaux liquides.

15. Tondeuse à conducteur porté électrique selon l'une quelconque des revendications 1 à 14, **caractérisé en ce que** les moyens de roulement sont composés de deux roues directrices avant (3) et de deux roues motrices arrière (3'), l'organe de coupe (6') étant entraîné directement par le moteur (9) correspondant et les roues motrices (3') étant entraînées à travers un réducteur différentiel (3") par le moteur (8) correspondant.

16. Tondeuse à conducteur porté électrique selon l'une quelconque des revendications 1 à 14, **caractérisée en ce que** les moyens de roulement sont composés de deux roues folles et de deux roues motrices entraînées chacune par un moteur propre correspondant, les vitesses de rotation relatives de ces derniers étant régulées par le moyen de direction.

17. Tondeuse à conducteur porté électrique selon l'une quelconque des revendications 1 à 16, **caractérisée en ce qu'**elle comporte au moins deux organes de coupe entraînés par au moins un moteur correspondant et montés de manière mutuellement décalée transversalement.

18. Procédé de commande du fonctionnement d'une tondeuse à conducteur porté électrique à alimentation autonome en fonctionnement ; cette tondeuse comprenant essentiellement un châssis monté sur des moyens de roulement, dont certains au moins sont reliés à un moyen de direction, et supportant un moyen d'assise pour l'utilisateur et au moins un dispositif de coupe avec un ou plusieurs organes de coupe, cette tondeuse comprenant en outre, d'une part, un moyen embarqué d'accumulation d'énergie électrique, tel qu'au moins une batterie ou au moins un accumulateur, d'autre part, au moins un premier moteur électrique d'entraînement en déplacement de ladite tondeuse à conducteur porté et, enfin, au moins un second moteur électrique d'entraînement dudit au moins un organe de coupe, procédé **caractérisé en ce qu'**il consiste à commander chacun des moteurs électriques (8, 9) par l'intermédiaire d'un variateur (10, 11) associé, adapté au type de moteur (8, 9) considéré, ce en fonction de signaux de commande délivrés par des organes de commande (12, 12', 13, 20) correspondants et de signaux d'état et/ou de mesure délivrés par des organes capteurs et/ou détecteurs (14, 14', 18, 19) correspondants, les états et/ou modes de fonctionnement desdits moteurs (8, 9) étant également au moins partiellement interdépendants et tributaires de l'état de charge du moyen (7) d'accumulation d'énergie électrique, la gestion du fonctionnement des différents moteurs (8, 9) étant réalisée soit par une unité électronique de traitement spécifique, soit par des unités électroniques de traitement (10', 11') intégrés aux différents variateurs (10, 11) et coopérant de manière complémentaire, cette gestion étant réalisée sur la base d'une programmation prédéterminée et en tenant compte des différents signaux précités.

19. Procédé de commande selon la revendication 18, **caractérisé en ce que** la tondeuse à conducteur porté électrique (1) consiste en une tondeuse selon l'une quelconque des revendications 2 à 17.

## Claims

1. Electric ride-on mower (1) having an autonomous power supply in use, essentially comprising a chassis (2) mounted on rolling means (3) at least some of which are connected to a steering means (4) and supporting seat means (5) for the user and at least one cutting device (6) with one or more cutting members, said ride-on mower (1) further comprising, on the one hand, an onboard electrical energy accumulation means (7) such as at least one battery or at least one accumulator, on the other hand, at least one first electric motor (8) driving movement of said ride-on mower (1) and, finally, at least one second electric motor (9) for driving said at least one cutting member (6), which ride-on mower (1) is **characterized in that** each of the electric motors (8, 9) is controlled by an associated drive (10, 11) , suitable for the type of motor (8, 9) in question, as a function of control signals delivered by corresponding control members (12, 12', 13, 20) and state and/or measurement signals delivered by corresponding sensing members and/or detectors (14, 14', 18, 19), the states and/or modes of operation of said motors (8, 9) being also at least partially interdependent and dependent on the state of charge of the means (7) for accumulating electrical energy, the operation of the various motors (8, 9) being managed either by a dedicated electronic processing unit or by electronic processing units (10', 11') integrated into the different drives (10, 11) and cooperating in a complementary manner, this management being performed on the basis of predetermined programming and taking account of the various signals mentioned above.

2. Electric ride-on mower according to Claim 1, **characterized in that** automatic limitation of the maximum speed of movement is applied in the event of operating said at least one cutting device (6), the mechanical stroke of the movement control member or members (12, 12') preferably remaining unchanged.

3. Electric ride-on mower according to Claim 1 or 2, **characterized in that** the movement control members (12, 12') consist of two pedals associated with a common potentiometer or each with a corresponding potentiometer (12"), delivering a control signal which is a function of the position of the pedals (12, 12') or the associated pedal (12, 12'), a first pedal (12) controlling forward movement and the second pedal (12') controlling reverse movement.

4. Electric ride-on mower according to any one of Claims 1 to 3, **characterized in that** it also includes speed regulation means, preferably integrated into the drive associated with the motor(s) in question, said regulation means being controlled by an activation and deactivation member (13) operable by the user.

5. Electric ride-on mower according to any one of Claims 1 to 4, **characterized in that** it includes, optionally integrated into the drives (10, 11), sensors (14, 14') for measuring the inrush currents of the different motors (8, 9), each of the measured values and their sum being compared to respective corresponding upper limit values exceeding which reduces the rotational speed of or even stops the motor (8 or 9) concerned or all of said motors (8, 9).

6. Electric ride-on mower according to any one of Claims 1 to 5, **characterized in that**, when a significant discharge of the means (7) for accumulating electrical energy is detected, the operation of said mower (1) is degraded or limited, various degraded modes of operation with increasing functional limitations optionally being provided each of which is related to a level or degree of discharge.

7. Electric ride-on mower according to Claim 6, **characterized in that**, as a function of the voltage (t) measured at the terminals of the means (7) for accumulating electrical energy, indicating its charge level, the following modes of operation 1) to 4) are imposed by the processing unit or units (10', 11'):
1) t > T1 : Possibility of normal operation;
2) T2 ≤ t < T1 : Power of the drive motor or motors (9) of the cutting member or members (6') is cut;
3) T3 ≤ t < T2 : Power of the motor or motors (9) driving the cutting member or members (6') is cut and the maximum rotational speed of the movement drive motor or motors (8) is limited;
4) t < T3 : Power of all motors (8 and 9) is cut and the mower (1) is completely shut down;
with T1, T2 and T3 representing the values of voltages below the nominal voltage of the means (7) for accumulating electrical energy and such that T1 > T2 > T3.

8. Electric ride-on mower according to any one of Claims 1 to 7, **characterized in that** the drives (10, 11) are reversible and are associated with respective capacitors (15) and therefore enable electrical power delivered by the associated motors (8, 9) when they operate as generators to be absorbed, in order to send it in a controlled manner to the accumulation means (7) and/or to one or more other motors (8, 9).

9. Electric ride-on mower according to any one of Claims 1 to 8, **characterized in that** it includes at least one source (16) of alternating current, possibly adjustable to different voltages, connected to the means (7) for accumulating electrical energy, integrating at least one chopper circuit and provided with at least one external connection device, such as a socket and/or a cable (17).

10. Electric ride-on mower according to any one of Claims 1 to 9, **characterized in that** it includes at least one cable drum (17'), one end of said cable (17) preferably being connected, optionally detachably, to the onboard alternating current source (16).

11. Electric ride-on mower according to any one of Claims 1 to 10, **characterized in that** it includes least one detector (18) of the presence of a driver on the seat means (5), for example in the form of a seat switch.

12. Electric ride-on mower according to any one of Claims 1 to 11, **characterized in that** it includes at least one presence detector (19) and/or a detector of closing of a pickup basket (19') movably and/or removably mounted on the chassis (2) of said mower (1).

13. Electric ride-on mower according to any one of Claims 1 to 12, **characterized in that** it includes emergency stop means (20) adapted to cut off completely the supply of power from the means (7) for accumulating electrical energy, for example in the form of a pushbutton.

14. Electric ride-on mower according to any one of Claims 1 to 13, **characterized in that** the dedicated processing unit or the additional processing units (10', 11') continuously perform a function for real-time diagnosis of the state and mode of operation of the mower (1) and its various functions, based on the signals supplied by the various sensors and detectors, the results of said diagnosis being displayed, optionally in coded form, by one or more display means (21), for example at least one liquid crystal display.

15. Electric ride-on lawn mower according to any one of Claims 1 to 14, **characterized in that** the rolling means are composed of two front steerable wheels (3) and two rear driving wheels (3'), the cutting member (6') being driven directly by the corresponding motor (9) and the driving wheels (3') being driven through a differential gear (3") by the corresponding motor (8).

16. Electric ride-on mower according to any one of Claims 1 to 14, **characterized in that** the rolling means include two idler wheels and two driving wheels each driven by its corresponding own motor, the relative rotational speeds of these latter motors being controlled by the steering means.

17. Electric ride-on mower according to any one of Claims 1 to 16, **characterized in that** it includes at least two cutting members driven by at least one corresponding motor and mounted in a mutually transversely offset manner.

18. Method of controlling the operation of an electric ride-on mower having an autonomous power supply in use, this mower essentially comprising a chassis mounted on rolling means at least some of which are connected to a steering means and supporting seat means for the user and at least one cutting device with one or more cutting members, this mower including, on the one hand, an onboard electrical energy accumulation means such as at least one battery or at least one accumulator, on the other hand, at least one first electric motor driving movement of said ride-on mower and, finally, at least one second electric motor for driving said at least one cutting member, which method is **characterized in that** each of the electric motors (8, 9) is controlled by an associated drive (10, 11), suitable for the type of motor (8, 9) in question, as a function of control signals delivered by corresponding control members (12, 12', 13, 20) and state and/or measurement signals delivered by corresponding sensing members and/or detectors (14, 14', 18, 19), the states and/or modes of operation of said motors (8, 9) being also at least partially interdependent and dependent on the state of charge of the means (7) for accumulating electrical energy, the operation of the various motors (8, 9) being managed either by a dedicated electronic processing unit or by electronic processing units (10', 11') integrated into the different drives (10, 11) and cooperating in a complementary manner, this management being performed on the basis of predetermined programming and taking account of the various signals mentioned above.

19. Control method according to Claim 18, **characterized in that** the electric ride-on mower (1) consists of a mower according to any one of Claims 2 to 17.

## Patentansprüche

1. Elektrischer Aufsitz-Rasenmäher (1) mit autonom arbeitender Stromversorgung, im Wesentlichen aufweisend ein Traggerüst (2), welches auf Rollmittel (3) montiert ist, von denen zumindest einige mit einem Lenkmittel (4) verbunden sind, welches Traggerüst eine Sitzmöglichkeit (5) für den Benutzer und mindestens eine Schneidevorrichtung (6) mit einem oder mehreren Schneideorganen trägt, welcher Aufsitz-Rasenmäher (1) des Weiteren einerseits ein mitgeführtes Akkumulatormittel (7) für elektrische Energie, wie mindestens eine Batterie oder mindestens einen Akkumulator, andererseits mindestens einen ersten Elektromotor (8) zur Antriebsbewegung des Aufsitz-Rasenmähers (1) und schließlich mindestens einen zweiten Elektromotor (9) zum Antreiben des wenigstens einen Schneideorgans (6) aufweist, welcher elektrische Aufsitz-Rasenmäher (1) **dadurch gekennzeichnet ist, dass** jeder der Elektromotoren (8, 9) durch einen zugeordneten Variator (10, 11) gesteuert ist, der an den betreffenden Motortyp (8, 9) angepasst ist, dies in Abhängigkeit von Steuerungssignalen, die von entsprechenden Steuerungsorganen (12, 12', 13, 20) bereitgestellt werden, und von Zustands- und/oder Messsignalen, die von entsprechenden Sensor- und/oder Detektororganen (14, 14', 18, 19) bereitgestellt werden, wobei die Betriebszustände und/oder -arten der genannten Motoren (8, 9) auch zumindest teilweise interdependent und abhängig vom Ladezustand des Akkumulatormittels (7) für elektrische Energie sind, wobei die Steuerung des Betriebs der verschiedenen Motoren (8, 9) entweder durch eine spezifische elektronische Auswertungseinheit oder durch in den verschiedenen Variatoren (10, 11) integrierte elektronische Auswertungseinheiten (10', 11') realisiert ist, welche Auswertungseinheiten sich ergänzend zusammenarbeiten, wobei die genannte Steuerung auf der Basis einer vorbestimmten Programmierung und unter Berücksichtigung der verschiedenen vorgenannten Signale realisiert ist.

2. Elektrischer Aufsitz-Rasenmäher nach Anspruch 1, **dadurch gekennzeichnet, dass**
eine automatische Begrenzung der maximalen Bewegungsgeschwindigkeit realisiert ist im Falle eines Ingangsetzens der mindestens einer Schneidevorrichtung (6), wobei der mechanische Hub des Bewegungssteuerungsorgans oder der Bewegungssteuerungsorgane (12, 12') vorzugsweise unverändert bleibt.

3. Elektrischer Aufsitz-Rasenmäher nach Anspruch 1 oder 2, **dadurch gekennzeichnet, dass**
die Bewegungssteuerungsorgane (12, 12') aus zwei Pedalen gebildet sind, die mit einem gemeinsamen Potentiometer oder jeweils mit einem entsprechenden Potentiometer (12") verbunden sind, welche/s ein Steuerungssignal in Abhängigkeit von der Stellung der Pedale (12, 12') oder des zugeordneten Pedals (12, 12') liefert, wobei ein erstes Pedal (12) die Vorwärtsbewegung und das zweite Pedal (12') die Rückwärtsbewegung steuert.

4. Elektrischer Aufsitz-Rasenmäher nach einem der Ansprüche 1 bis 3, **dadurch gekennzeichnet, dass**
er auch ein Regulierungsmittel für die Bewegungsgeschwindigkeit aufweist, das vorzugsweise in demjenigen Variator integriert ist, welcher dem betreffenden Motor oder den betreffenden Motoren zugeordnet ist, welches Regulierungsmittel durch ein vom Benutzer betätigbares Aktivierungs- und Deaktivierungsorgan (13) gesteuert ist.

5. Elektrischer Aufsitz-Rasenmäher nach einem der Ansprüche 1 bis 4, **dadurch gekennzeichnet, dass**
er, insbesondere in die Variatoren (10, 11) integriert, Sensoren (14, 14') zum Messen der Einschaltströme der verschiedenen Motoren (8, 9) aufweist, wobei jeder der gemessenen Werte und ihre Summe mit jeweils entsprechenden oberen Grenzwerten verglichen wird, deren Überschreitung eine Reduzierung der Rotationsgeschwindigkeiten oder eine Abschaltung des betroffenen Motors (8 oder 9) oder der Gesamtheit der genannten Motoren (8, 9) bewirkt.

6. Elektrischer Aufsitz-Rasenmäher nach einem der Ansprüche 1 bis 5, **dadurch gekennzeichnet, dass**,
wenn eine erhebliche Entladung des Akkumulatormittels (7) für elektrische Energie festgestellt wird, der Betrieb des Rasenmähers (1) verlangsamt oder eingeschränkt ist, wobei verschiedene verlangsamte Betriebsarten mit wachsenden funktionellen Einschränkungen vorgesehen sein können, von denen jede einem Entladungszustand oder -grad zugeordnet ist.

7. Elektrischer Aufsitz-Rasenmäher nach Anspruch 6, **dadurch gekennzeichnet, dass**
in Abhängigkeit von der an den Anschlüssen des Akkumulatormittels (7) für elektrische Energie gemessenen Spannung (t), welche Spannung den Ladezustand des besagten Mittels anzeigt, folgende Betriebsarten 1) bis 4) durch die Auswertungseinheit oder -einheiten (10', 11') vorgegeben sind:
- 1) t ≥T1: normaler Betrieb möglich;
- 2) T2 ≤ t < T1: die Versorgung des Antriebsmotors oder der Antriebsmotoren (9) des Schneideorgans oder der Schneideorgane (6') ist unterbrochen;
- 3) T3 ≤ t < T2: die Versorgung des Antriebsmotors oder der Antriebsmotoren (9) des Schneideorgans oder der Schneideorgane (6') ist unterbrochen und die maximale Rotationsgeschwindigkeit des Motors oder der Motoren (8) zur Antriebsbewegung ist eingeschränkt;
- 4) t < T3: Unterbrechung der Stromversorgung aller Motoren (8 und 9) und komplette Abschaltung des Rasenmähers (1);
wobei T1, T2 und T3 Spannungswerte darstellen, die niedriger sind als die Nenn-spannung des Akkumulatormittels (7) für elektrische Energie, wobei T1 > T2 > T3.

8. Elektrischer Aufsitz-Rasenmäher nach einem der Ansprüche 1 bis 7, **dadurch gekennzeichnet, dass**
die Variatoren (10, 11) einen umkehrbaren Betrieb aufweisen und jeweiligen Kondensatoren (15) zugeordnet sind, was es ermöglicht, die elektrische Energie, die von den zugeordneten Motoren (8, 9) bereitgestellt wird, wenn diese als Generatoren funktionieren, aufzunehmen und auf kontrollierte Weise zum Akkumulatormittel (7) und/oder zu einem oder mehreren anderen Motoren (8, 9) zu leiten.

9. Elektrischer Aufsitz-Rasenmäher nach einem der Ansprüche 1 bis 8, **dadurch gekennzeichnet, dass**
er mindestens eine Wechselstromquelle (16), insbesondere mit verschiedenen einstellbaren Spannungen, aufweist, die mit dem Akkumulatormittel (7) für elektrische Energie verbunden ist, umfassend mindestens eine Zerhackerschaltung und ausgestattet mit mindestens einer Vorrichtung für einen externen Anschluss, wie zum Beispiel eine Steckdose und/oder ein Kabel (17).

10. Elektrischer Aufsitz-Rasenmäher nach einem der Ansprüche 1 bis 9, **dadurch gekennzeichnet, dass**
er mindestens eine Kabelaufwickelung (17') aufweist, wobei das eine Ende des Kabels (17) vorzugsweise und insbesondere auf abnehmbare Art mit der mitgeführten Wechselstromquelle (16) verbunden ist.

11. Elektrischer Aufsitz-Rasenmäher nach einem der Ansprüche 1 bis 10, **dadurch gekennzeichnet, dass**
er mindestens einen Detektor (18) für die Anwesenheit eines Fahrers auf der Sitzmöglichkeit (5) aufweist, beispielsweise in Form eines Sitzkontaktschalters.

12. Elektrischer Aufsitz-Rasenmäher nach einem der Ansprüche 1 bis 11, **dadurch gekennzeichnet, dass**
er mindestens einen Detektor (19) für das Vorhandensein und/oder die Schließung eines Sammelkorbs (19') aufweist, welcher beweglich und/oder abnehmbar an dem Traggerüst (2) des Rasenmähers (1) montiert ist.

13. Elektrischer Aufsitz-Rasenmäher nach einem der Ansprüche 1 bis 12, **dadurch gekennzeichnet, dass**
er ein Notabschaltmittel (20) aufweist, welches dafür geeignet ist, eine komplette Abschaltung der Stromversorgung ab dem Akkumulatormittel (7) für elektrische Energie zu realisieren, zum Beispiel nach Art eines Druckknopfs.

14. Elektrischer Aufsitz-Rasenmäher nach einem der Ansprüche 1 bis 13, **dadurch gekennzeichnet, dass**
die spezifische Auswertungseinheit oder die komplementären Auswertungseinheiten (10', 11') laufend eine Echtzeit-Diagnosefunktion des Zustands und der Betriebsart des Rasenmähers (1) und seiner verschiedenen Funktionen realisieren, dies auf der Basis der von den verschiedenen Sensoren und Detektoren bereitgestellten Signale, wobei die Ergebnisse der Diagnose visualisiert werden, insbesondere in kodierter Form, über ein bzw. mehrere Anzeigemittel (21), umfassend zum Beispiel mindestens eine FlüssigkristallAnzeige.

15. Elektrischer Aufsitz-Rasenmäher nach einem der Ansprüche 1 bis 14, **dadurch gekennzeichnet, dass**
die Rollmittel aus zwei vorderen Lenkrädern (3) und zwei hinteren Antriebsrädern (3') gebildet sind, wobei das Schneideorgan (6') direkt vom dazugehörigen Motor (9) und die Antriebsräder (3') über ein Differentialgetriebe (3") vom dazugehörigen Motor (8) angetrieben sind.

16. Elektrischer Aufsitz-Rasenmäher nach einem der Ansprüche 1 bis 14, **dadurch gekennzeichnet, dass**
die Rollmittel zwei freilaufende Räder und zwei Antriebsräder umfassen, die jeweils von einem zugeordneten eigenen Motor angetrieben sind, wobei die relativen Rotationsgeschwindigkeiten der Motoren vom Lenkmittel reguliert werden.

17. Elektrischer Aufsitz-Rasenmäher nach einem der Ansprüche 1 bis 16, **dadurch gekennzeichnet, dass**
er mindestens zwei Schneideorgane aufweist, die von mindestens einem zugeordneten Motor angetrieben und gegeneinander quer versetzt angeordnet sind.

18. Verfahren zur Betriebsteuerung eines elektrischen Aufsitz-Rasenmähers mit autonom arbeitender Stromversorgung; wobei der Rasenmäher im Wesentlichen aufweist ein Traggerüst, welches auf Rollmitteln montiert ist, von denen zumindest einige mit einem Lenkmittel verbunden sind, welches Traggerüst eine Sitzmöglichkeit für den Benutzer und mindestens eine Schneidevorrichtung mit einem oder mehreren Schneideorganen trägt, wobei der Rasenmäher des Weiteren einerseits ein mitgeführtes Akkumulatormittel für elektrische Energie, wie mindestens eine Batterie oder mindestens einen Akkumulator, andererseits mindestens einen ersten Elektromotor zur Antriebsbewegung des Aufsitz-Rasenmähers und schließlich mindestens einen zweiten Elektromotor zum Antreiben des wenigstens einen Schneideorgans aufweist, welches Verfahren **dadurch gekennzeichnet ist, dass**
jeder der Elektromotoren (8,9) durch einen zugeordneten Variator (10, 11) gesteuert wird, der an den betreffenden Motortyp (8, 9) angepasst ist, dies in Abhängigkeit von Steuerungssignalen, die von entsprechenden Steuerungsorganen (12, 12', 13, 20) bereitgestellt werden, und von Zustands- und/oder Messsignalen, die von entsprechenden Sensor- und/oder Detektororganen (14, 14', 18, 19) bereitgestellt werden, wobei die Betriebszustände und/oder-arten der genannten Motoren (8, 9) auch zumindest teilweise interdependent und abhängig vom Ladezustand des Akkumulatormittels (7) für elektrische Energie sind, wobei die Steuerung des Betriebs der verschiedenen Motoren (8, 9) entweder durch eine spezifische elektronische Auswertungseinheit oder durch in den verschiedenen Variatoren (10, 11) integrierte elektronische Auswertungseinheiten (10', 11') realisiert ist, welche Auswertungseinheiten sich ergänzend zusammenarbeiten, wobei die genannte Steuerung auf der Basis einer vorbestimmten Programmierung und unter Berücksichtigung der verschiedenen vorgenannten Signale realisiert ist.

19. Steuerungsverfahren nach Anspruch 18, **dadurch gekennzeichnet, dass**
der elektrische Aufsitz-Rasenmäher (1) als Rasenmäher gemäß einem der Ansprüche 2 bis 17 ausgebildet ist.
